**Europäisches Patentamt**

**European Patent Office**

**Office européen des brevets**

(19)

(11) Numéro de publication : **0 286 466 B1**

(12)

# FASCICULE DE BREVET EUROPEEN

(45) Date de publication du fascicule du brevet :
**15.01.92 Bulletin 92/03**

(51) Int. Cl.⁵ : **G01M 11/00**

(21) Numéro de dépôt : **88400537.2**

(22) Date de dépôt : **08.03.88**

(54) **Méthode de détection des couplages de polarisation dans un système optique biréfringent, et son application à l'assemblage des composants d'un système optique.**

(30) Priorité : **13.03.87 FR 8703459**

(43) Date de publication de la demande :
**12.10.88 Bulletin 88/41**

(45) Mention de la délivrance du brevet :
**15.01.92 Bulletin 92/03**

(84) Etats contractants désignés :
**DE GB**

(56) Documents cités :
**EP-A- 0 190 922**
**PATENT ABSTRACTS OF JAPAN, vol. 9, no.**
**320 (P-413)[2043], 14 décembre 1985; & JP-**
**A-60 147 627 (NIPPON DENSHIN DENWA**
**KOSHA) 03-08-1985**
**Idem**

(56) Documents cités :
**APPLIED OPTICS, vol. 19, no. 9, 1er mai 1980,**
**pages 1489-1492, New York US; N. SHIBATA et**
**al.: "Spatial technique for measuring modal**
**delay differences in a dual-mode optical**
**fiber"**
**Hecht, E. and Zajac, A.: "Optics", Addison-**
**Wesky Publishing Company, 1974**

(73) Titulaire : **THOMSON-CSF**
**51, Esplanade du Général de Gaulle**
**F-92800 Puteaux (FR)**

(72) Inventeur : **Lefevre, Hervé**
**THOMSON-CSF SCPI 19, avenue de Messine**
**F-75008 Paris (FR)**
Inventeur : **Botti, Serge**
**THOMSON-CSF SCPI 19, avenue de Messine**
**F-75008 Paris (FR)**
Inventeur : **Bettini, Jean-Pierre**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

## Description

L'invention se rapporte au domaine de l'optique et plus particulièrement à une méthode de test des couplages de polarisation dans un système optique biréfringent et à son application pour le montage des composants des systèmes optiques intégrés.

Un système optique intégré comporte principalement une source et une succession d'éléments conducteurs de la lumière, fibres optiques, jonctions optiques, séparateurs optiques, modulateurs etc. Les liaisons entre ces différents éléments doivent être réalisées avec soin et des précautions doivent être prises pour que les couplages parasites soient réduits au minimum.

Classiquement lorsque l'on analyse un système optique, par exemple un gyromètre à fibre optique, un certain nombre de caractéristiques peuvent être mesurées, par exemple les pertes, la rotation de polarisation due aux défauts ou aux contraintes appliquées, etc. Mais les méthodes connues ne permettent pas de situer les défauts dans le système, ni de les mesurer indépendamment les uns des autres.

On connaît du PATENT ABSTRACTS OF JAPAN, vol. 9, no. 320 (P-413)[2043], 14/12/85 une méthode et appareil pour mesurer le degré de conservation de la polarisation dans une fibre optique par des moyens interférométriques.

L'invention a pour objet une méthode de test qui permet de localiser et de mesurer les couplages dans un système optique biréfringent. Cette méthode est notamment applicable au montage des composants d'un système optique car elle permet une mesure non destructive et un contrôle in situ qui permet de minimiser les couplages lors du montage.

Selon l'invention une méthode de détection des couplages de polarisation localisés dans un système optique biréfringent, est caractérisée en ce qu'elle utilise pour la mesure et la localisation de ces couplages un appareil de mesure comportant un polariseur non aligné sur les axes de biréfringence du système optique, (45° donnant la sensibilité maximale) un interféromètre associé à des moyens d'analyse d'interférences, et des moyens pour faire varier la longueur de l'un des trajets optiques dans l'interféromètre, et en ce qu'elle consiste à émettre au moins un train d'onde polarisé selon un axe de biréfringence du système optique ; chaque couplage de polarisation localisé créant à partir du train d'onde primaire émis un train d'onde couplé selon l'autre axe de biréfringence, le polariseur ramenant ces deux trains d'ondes selon une direction de polarisation commune, et en ce que les moyens pour faire varier la longueur d'un trajet optique dans l'interféromètre sont ajustés pour détecter les interférences portant sur la moitié de l'énergie émise associées à un couplage de polarisation localisé, la différence des trajets dans l'interféromètre étant directement caractéristique de la position du couplage de polarisation détecté dans le système optique, et le contraste des franges mesuré par les moyens d'analyse pour cette position étant directement lié à l'intensité du couplage localisé en ce point.

L'invention sera mieux comprise et d'autres caractéristiques apparaîtront à l'aide de la description qui suit en référence aux figures annexées.

La figure 1 représente les trains d'ondes transmis le long d'un chemin optique en cas de couplage ;
La figure 2 représente schématiquement le dispositif de mesure des couplages de polarisation utilisé dans la méthode de détection selon l'invention ;
La figure 3 est un schéma explicatif ;
La figure 4 illustre la méthode pour l'alignement d'une source avec une fibre ;
La figure 5 illustre la méthode pour l'alignement de deux fibres ;
La figure 6 illustre le test in situ d'un séparateur optique.

Les couplages induits dans un système optique biréfringent peuvent être dus à des contraintes mécaniques, à une modification de la structure dans un composant tout fibre du type coupleur ou dérivateur par exemple, ou à des défauts d'alignement d'axes, par exemple dans une épissure pour le raccordement de deux fibres optiques, ou à une interface fibre optique composant optique sur niobate de lithium. La méthode de détection selon l'invention permet de détecter et de mesurer ces défauts par une exploration virtuelle systématique du chemin optique. Cette méthode s'applique notamment au montage des composants d'un système optique biréfringent notamment dans le but d'aligner les axes de biréfringence aux transitions entre composants du système optique.

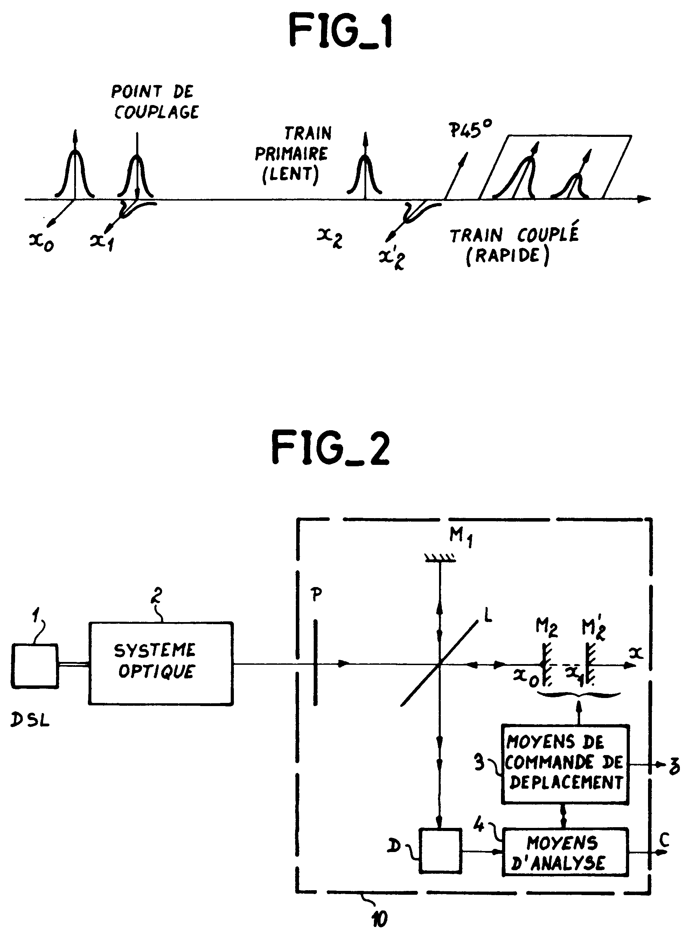

D'une manière générale, dans un système optique biréfringent, par exemple une fibre optique monomode biréfringente associée à une source de lumière, par exemple une diode super luminescente DSL, couplée au système optique de telle façon que le train d'onde issu de la source se propage selon un des axes de biréfringence, l'axe lent par exemple, si à un endroit de la fibre existe une contrainte particulière ou un défaut, la lumière passe partiellement selon l'autre axe, l'axe rapide dans l'exemple ci-dessus. A partir de ce défaut, deux trains d'onde vont se propager le long du chemin optique, à des vitesses différentes, selon les deux axes de biréfringence. A la sortie du système optique, au bout d'une certaine distance, les trains d'onde ne se recouvrent plus. La figure 1 illustre cet effet : le train d'onde est transmis à l'abscisse $x_0$, subit un couplage à l'abscisse $x_1$ et, lorsque le train primaire (lent) atteint l'abscisse $x_2$, le train couplé rapide est en avance et a atteint l'abscisse $x'_2$.

Le dispositif de mesure utilisé dans la méthode de test selon l'invention met en oeuvre un interféromètre précédé d'un polariseur, à la sortie du système optique, de façon que la lumière suive deux chemins optiques de longueurs différentes qui par leur décalage ramène, au moins partiellement, en coïncidence temporelle et spatiale les trains d'onde de façon à créer des interférences. Le contraste des franges et la différence de chemin sont, comme il sera montré ci-après, directement liés au niveau du couplage résultant du défaut et à la position de ce défaut dans le système optique. C'est cet effet qui est utilisé dans la méthode de test selon l'invention.

Cette méthode permet également de caractériser un paramètre physique variable le long du chemin optique par exemple le long d'une fibre, et créant des couplages localisés : ce paramètre peut être la pression appliquée à la fibre.

Le dispositif représenté sur la figure 2 comporte une source de lumière, 1. Cette source est avantageusement une DSL, pour "Diode Super Luminescente" qui fournit de la lumière dans un spectre large et est cohérente sur une longueur faible (de l'ordre de 40 μm), c'est-à-dire est beaucoup moins cohérente que la lumière issue d'un laser, bien qu'un peu plus que la lumière blanche. Cette source de lumière alimente un système optique 2 biréfringent, par exemple un gyromètre à fibre optique. Les moyens de mesure comportent principalement un polariseur P, à 45° des axes de biréfringence du système optique. Ce polariseur est suivi d'un interféromètre qui permet de créer des interférences entre les ondes transmises selon les deux axes de biréfringence du système optique. Sur la figure, cet interféromètre est un interféromètre de Michelson qui comporte une lame semi-réfléchissante L et deux miroirs $M_1$ et $M_2$ recevant respectivement la lumière réfléchie et la lumière transmise par la lame L, et un détecteur D qui reçoit simultanément la lumière réfléchie par les deux miroirs $M_1$ et $M_2$ et respectivement transmise et réfléchie par la lame L. Le détecteur D est suivi de moyens d'analyse 4 du rayonnement reçu par le détecteur qui donnent une mesure du contraste des franges détectées C. Le dispositif comporte en outre des moyens de déplacement 3, du miroir $M_2$. $M'_2$ est une seconde position de $M_2$.

Le polariseur placé à la sortie du système optique à 45° des axes de biréfringence environ pour maximiser l'efficacité, permet de placer les trains d'onde, respectivement primaire et couplé, suivant la même polarisation. A la sortie du polariseur les trains d'onde ne se recouvrent pas spatialement du fait des différentes vitesses de propagation. Dans l'interféromètre qui est ensuite placé sur le trajet optique, le miroir mobile $M_2$ est alors déplacé et l'on analyse les interférences créées.

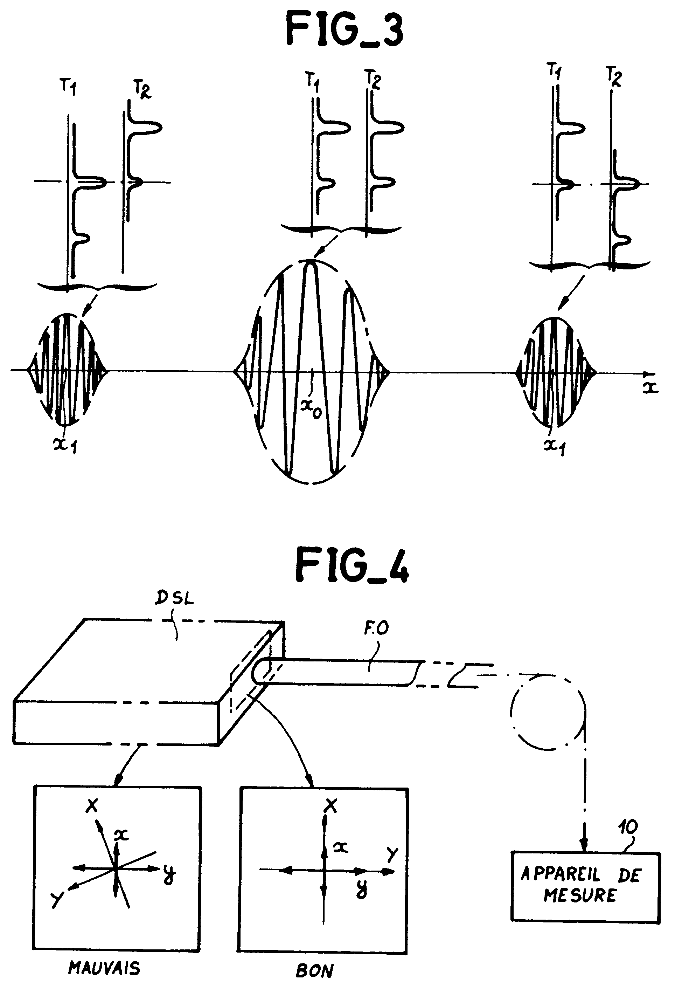

La figure 3 illustre la forme des trains d'onde selon le déplacement x du miroir $M_2$ de l'interféromètre :

— pour l'abscisse $x_0$ les deux trajets $T_1$ et $T_2$ dans l'interféromètre sont égaux ; les interférences portent sur toute l'énergie optique transmise, les trains d'onde primaire et couplé étant en coïncidence spatiale et temporelle

— pour deux abscisses symétriques $x_1$ et $x'_1$, où le train d'onde primaire transmis sur l'un des trajets interfère avec le train d'onde couplé transmis sur l'autre trajet, les interférences créées portent sur la moitié de l'énergie. La différence des trajets optiques est $2(x_1 - x_0)$.

Soient $n_1$ et $n_2$ les deux indices du milieu biréfringent. Si l est la distance entre le point de couplage et la sortie du système optique avant le polariseur à 45°, P, la différence des trajets dans l'interféromètre est liée au décalage l par :

$$2(x_1 - x_0) = (n_2 - n_1)l$$

La différence de longueur des chemins optiques dans l'interféromètre est lié au retard entre les deux trains d'ondes primaire et couplé et donc au chemin parcouru dans le milieu optique biréfringent depuis le point de couplage. La position du couplage z est donc directement liée à la position du décalage du miroir $M_2$ de l'interféromètre. Le contraste des franges d'interférence est lié au rapport d'amplitude entre les deux ondes et donc lié au couplage introduit à l'abscisse z associée au décalage du miroir $M_2$. Un contraste de $10^{-3}$, facilement mesurable, correspond à un couplage très faible de $-60dB$ ($10^{-6}$ en puissance optique).

La résolution spatiale obtenue, avec comme source une diode super-luminescente large spectre et comme milieu biréfringent une fibre monomode à conservation de polarisation, est typiquement de 5 à 10 cm. Dans un guide optique intégré utilisant un substrat en niobate de lithium, $LiNb, 0_3$ la résolution spatiale apportée par ce système est de 0,5 mm.

La figure 4 illustre la méthode pour l'alignement d'une source avec une fibre optique. La diode super-luminescente DSL émet de la lumière issue de sa face de sortie, qui doit être transmise à une fibre optique à conservation de polarisation F.O. La lumière issue de cette DSL est polarisée selon deux axes x et y et les axes de biréfringence de la fibre optique F.O sont X et Y. L'appareil de mesure 10 du type décrit en référence à la figure 2 reçoit la lumière issue du système optique qui inclut cette source et cette fibre et qui peut également comporter d'autres éléments. Pour le déplacement du miroir $M_2$ associé à la face de sortie de la source, les moyens d'analyse détectent des interférences fonction du couplage. Si les axes x et y ne coïncident pas avec les axes X et Y de la fibre, le couplage de polarisation est important de même que le contraste des franges. Par contre lorsque les axes coïncident, le couplage de polarisation s'annule de même que le contraste des franges. En tournant l'extrémité de la fibre autour de son axe longitudinal dans la face de sortie de la source, il est possible d'observer l'évolution des franges résultantes et de déterminer la meilleure position de la fibre autour de son axe longitudinal dans la face de sortie de la source. Le collage peut alors être effectué.

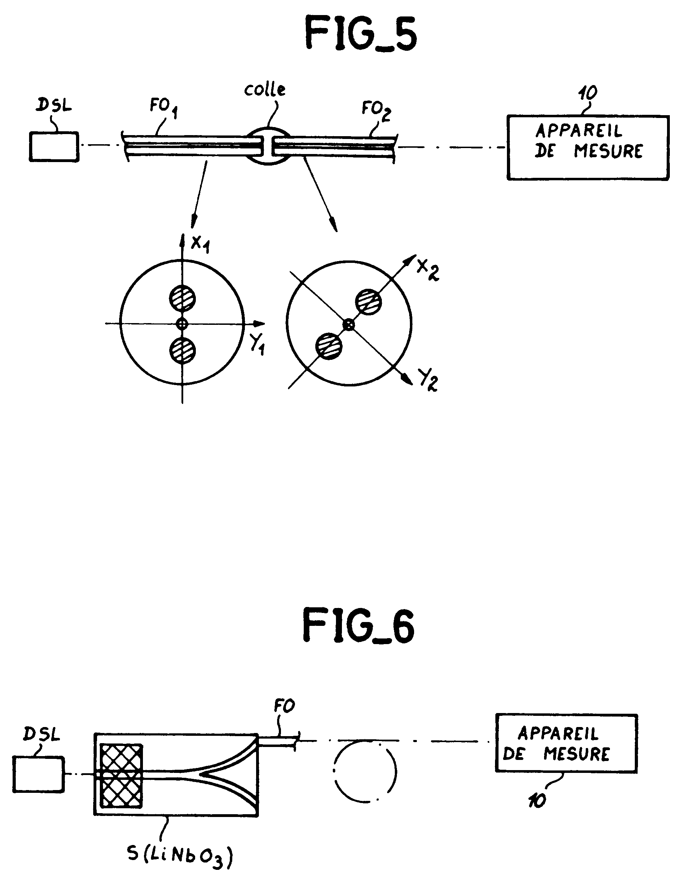

De la même manière, la figure 5 illustre l'alignement de deux fibres optiques à conservation de polarisation par la même méthode : la source de lumière DSL transmet de la lumière à l'extrémité d'une première fibre $FO_1$ qui doit être connectée à une seconde fibre $FO_2$. Un appareil de mesure 10 tel que décrit ci-dessus reçoit le rayonnement émergent de la deuxième fibre. Pour la position x du miroir $M_2$ associée à la zone de liaison des deux fibres à l'abscisse z dans le système optique, des franges d'interférence sont observées dans l'appareil de mesure. Si $X_1$ et $Y_1$ sont les axes de biréfringence de la fibre $FO_1$ et $X_2$ et $Y_2$ les axes de biréfringence de la fibre $FO_2$, l'observation de la variation du contraste des franges lorsqu'une fibre tourne autour de son axe longitudinal, l'autre étant maintenue fixe, permet de déterminer la position dans laquelle les axes $X_1$ et $X_2$, et $Y_1$ et $Y_2$ respectivement coïncident. Le collage des deux fibres est alors effectué dans cette position, le couplage de polarisation dû au raccordement étant minimisé.

La figure 6 illustre un exemple de raccordement entre un élément optique sur niobate de lithium et une fibre optique. Une source DSL émet un rayonnement lumineux vers la face d'entrée du séparateur optique S. L'une des sorties du séparateur doit être reliée, en minimisant les couplages de polarisation à une fibre optique F.O. Pour cela, comme précédemment l'appareil de mesure est placé en sortie de la fibre pour analyser le rayonnement issu de cette fibre. Pour la position x du miroir $M_2$ correspondant à la localisation du raccordement, l'observation des franges par les moyens d'analyse permet de trouver la position de la fibre dans laquelle le couplage de polarisation est minimisé. La méthode s'applique de la même façon à la connection d'une jonction Y à une fibre optique.

Cette mesure non destructive qui permet le contrôle lors du montage est adaptable à toute détection de couplage de polarisation localisé ainsi qu'à un contrôle virtuel systématique de tout un chemin optique dans lequel on souhaite détecter les couplages de polarisation localisés.

## Revendications

1. Méthode de détection des couplages de polarisation localisés dans un système optique biréfringent, caractérisée en ce qu'elle utilise pour la mesure et la localisation de ces couplages un appareil de mesure comportant un polariseur (P) non aligné sur les axes de biréfringence du système optique, un interféromètre (L, $M_1$, $M_2$, D) associé à des moyens d'analyse d'interférences (4), et des moyens (3) pour faire varier la longueur de l'un des trajets optiques dans l'interféromètre, et en ce qu'elle consiste à émettre au moins un train d'onde polarisé selon un axe de biréfringence du système optique ; chaque couplage de polarisation localisé créant à partir du train d'onde primaire émis un train d'onde couplé selon l'autre axe de biréfringence, le polariseur ramenant ces deux trains d'ondes selon une direction de polarisation commune, et en ce que les moyens (3) pour faire varier la longueur d'un trajet optique dans l'interféromètre sont ajustés pour détecter les interférences portant sur la moitié de l'énergie émise associées à un couplage de polarisation localisé, la différence des trajets dans l'interféromètre étant directement caractéristique de la position (z) du couplage de polarisation détecté dans le système optique, et le contraste des franges (C) mesuré par les moyens d'analyse (4) pour cette position étant directement lié à l'intensité du couplage localisé en ce point.

2. Méthode de détection selon la revendication 1, caractérisée en ce que le polariseur (P) a son axe à 45° des axes de biréfringence du système optique.

3. Méthode selon la revendication 1, caractérisée en ce qu'elle utilise un interféromètre du type interféromètre de Michelson, dans lequel l'un des miroirs ($M_2$) est mobile le long de l'axe optique pour faire varier la longueur d'un trajet optique, le déplacement $d = (x_1 - x_0)$ du miroir à partir de la position pour laquelle les deux trajets sont égaux étant égal à la demi-différence de chemin des trains d'ondes respectivement primaire et couplé, dans le système optique biréfringent, entre le point de couplage et le polariseur.

4. Méthode selon la revendication 1, caractérisée en ce que, dans les moyens d'analyse, le contraste des franges donne le rapport d'amplitude entre le train d'onde primaire et le train d'onde couplé résultant du couplage de polarisation localisé.

5. Application de la méthode selon l'une des revendications précédentes à l'assemblage des composants d'un système optique biréfringent, caractérisée en ce que, pour optimiser l'assemblage de deux composants d'un système optique biréfringent, l'orientation relative des deux éléments est ajustée en minimisant les interférences créées dans l'interféromètre par la différence de longueurs des trajets optiques associée à la position de la jonction, les axes de biréfringence des deux éléments étant alors alignés.

6. Application selon la revendication 5 à l'orientation d'une fibre optique biréfringence, à conservation de polarisation, par rapport à la face d'émission d'une diode super-luminescente.

7. Application selon la revendication 5 au raccordement de deux fibres optiques à conservation de polarisation.

8. Application selon la revendication 5, au test des composants montés dans un système optique biréfringent pour minimiser les couplages de polarisation.

**Claims**

1. A method for detecting localized polarisation couplings in a bireflection system, characterized in that it, measuring and localizing said couplings, a measuring apparatus is used comprising a polarizer (P) which is not aligned with the bireflection axes of the optical system, an interferometer (L, $M_1$, $M_2$, D) associated with interference analysis means (4) and means (3) for varying the length of one of the optical paths in the interferometer, and in that it consists in emitting at least one polarized wave train along a bireflection axis of the optical system, each localized polarization coupling generating from the primary emitted wave train a wave train coupled along the other bireflection axis, the polarizer aligning said two wave trains along a common polarization direction, and in that the means (3) for varying the length of an optical path in the interferometer are adjusted such that the interferences concerning one half of the emitted energy and associated with a localized polarisation coupling are detected, the difference of the paths in the interferometer being directly significative for the position (z) of the polarisation coupling detected in the optical system, while the contrast of the interference fringes (C) measured by the analysis means (4) at said position is directly linked to the intensity of the coupling localized at said point.

2. A detection method according to claim 1, characterized in that the polarizer (P) has its axis at 45° relative to the bireflection axes of the optical system.

3. A method according to claim 1, characterized in that an interferometer of the Michelson type is used, in which one of the mirrors ($M_2$) is movable along the optical axis for varying the length of one optical path, the displacement $d = (x_1 - x_0)$ of the mirror starting at the position in which the two paths are equal in length, being equal to half of the path difference of the trajectories of the respective primary and coupled wave trains in the optical bireflection system between the coupling point and the polarizer.

4. A method according to claim 1, characterized in that in the analysis means, the contrast of the fringes presents the amplitude ratio between the primary wave train and the coupled wave train resulting from the localized polarisation coupling.

5. An application of the method according to any one of the preceding claims in assembling the components of an optical bireflection system, characterized in that, for the purpose of optimizing the assembling of two components of an optical bireflection system, the relative orientiation of the two elements is adjusted by minimizing the interferences which are created in the interferometer by the length difference of the optical paths associated with the position of the coupling, the bireflection axes of the two elements then being aligned.

6. An application according to claim 5 to the orientation of an optical bireflection fiber of the polarisation conserving type relative to the emit face of a superluminescent diode.

7. An application according to claim 5 to connecting two optical fibers of the polarisation conserving type.

8. The application according to claim 5 to testing the components mounted in an optical bireflection system for the purpose of minimizing the polarisation couplings.

**Patentansprüche**

1. Verfahren zur Erfassung von lokalisierten Polarisationskopplungen in einem optischen Doppelbrechungssystem, dadurch gekennzeichnet, daß man zur Messung und Lokalisierung dieser Kopplungen ein Meßgerät mit einem auf die Doppelbrechungsachsen des optischen Systems nicht ausgerichteten Polarisator (P), einem mit Interferenzanalysemitteln (4) verbundenen Interferometer (L, $M_1$, $M_2$, D) und Mitteln (3) zur Veränderung der Länge eines der optischen Pfade im Interferometer verwendet, und daß das Verfahren im Aussenden mindestens eines entlang einer Doppelbrechungsachse des optischen Systems polarisierten Wellenzugs besteht, wobei jede lokalisierte Polarisationskopplung aus dem ausgesandten Primärwellenzug einen gekoppelten Wellenzug entlang der anderen Doppelbrechungsachse erzeugt und der Polarisator diese beiden Wellenzüge in eine gemeinsame Polarisationsrichtung bringt, und daß die Mittel (3) zur Veränderung der Länge eines der optischen Pfade im Interferometer auf die Erfassung der einer lokalisierten Polarisationskopplung zugeordneten Interferenzen abgestimmt sind, welche die Hälfte der ausgesandten Energie betreffen, wobei der Unterschied der Pfade im Interferometer direkt für die Position (z) der im optischen System erfaßten Polarisationskopplung kennzeichnend ist und der Kontrast der für diese Position von den Analysemitteln (4) gemessenen Interferenzstreifen (C) direkt von der Stärke der in diesem Punkt lokalisierten Kopplung abhängt.

2. Erfassungsverfahren nach Anspruch 1, dadurch gekennzeichnet, daß die Achse des Polarisators (P) um 45° gegen die Doppelbrechungsachsen des optischen Systems geneigt ist.

3. Verfahren nach Anspruch 1, dadurch gekennzeichnet, daß man ein Interferometer vom Michelsontyp verwendet, in welchem einer der Spiegel ($M_2$) entlang der optischen Achse beweglich ist, um die Länge eines optischen Pfades zu verändern, wobei die Verschiebung d = ($x_1$ – $x_0$) des Spiegels ab derjenigen Position, für die die beiden Pfade gleich sind, dem halben Wegunterschied zwischen dem primären und dem gekoppelten Wellenzugs im optischen Doppelbrechungssystem zwischen dem Kopplungspunkt und dem Polarisator enspricht.

4. Verfahren nach Anspruch 1, dadurch gekennzeichnet, daß der Kontrast der Interferenzstreifen in den Analysemitteln das Amplitudenverhältnis zwischen dem Primärwellenzug und dem aus der lokalisierten Polarisationskopplung resultierenden gekoppelten Wellenzug ergibt.

5. Anwendung des Verfahrens nach einem der vorhergehenden Ansprüche auf den Aufbau eines optischen Doppelbrechungssystems, dadurch gekennzeichnet, daß zum Optimieren zweier Komponenten eines optischen Doppelbrechungssystems die relative Ausrichtung der beiden Elemente durch Minimieren der Interferenzen abgestimmt wird, welche im Interferometer durch den Längenunterschied der der Position der Kopplung zugeordneten optischen Pfade erzeugt werden, wobei dann die Doppelbrechungsachsen der beiden Elemente in einer Flucht liegen.

6. Anwendung nach Anspruch 5 auf die Ausrichtung einer polarisationsbeständigen optischen Doppelbrechungsfaser relativ zur Emissionsfläche einer Superlumineszenzdiode.

7. Anwendung nach Anspruch 5 auf den Anschluß zweier polarisationsbeständiger optischer Fasern.

8. Anwendung nach Anspruch 5 auf die Überprüfung von Komponenten, die in einem optischen Doppelbrechungssystem zum Minimieren der Polarisationskopplungen angebracht sind.

# FIG_1

POINT DE
COUPLAGE

TRAIN
PRIMAIRE
(LENT)

$P45°$

$x_0$    $x_1$          $x_2$    $x'_2$

TRAIN COUPLÉ
(RAPIDE)

# FIG_2

$M_1$

$P$

$L$

$M_2$   $M'_2$

$x$

$x_0$   $x_1$

SYSTEME
OPTIQUE

$DSL$

MOYENS DE
COMMANDE DE
DEPLACEMENT

$D$

MOYENS
D'ANALYSE

$C$

10

# FIG_3

# FIG_4

# FIG_5

# FIG_6